# EUROPÄISCHE PATENTSCHRIFT

(11) **EP 3 522 257 B1**
(45) Veröffentlichungstag und Bekanntmachung des Hinweises auf die Patenterteilung: **06.03.2024**
(21) Anmeldenummer: 19151240.9
(22) Anmeldetag: 10.01.2019
(51) Int. Cl.: H01M 10/0525, B60K 1/04, B60L 50/60, B60L 50/64, B66F 9/075, H01M 50/204, H01M 50/249, H01M 50/262

(54) **BATTERIE FÜR EIN FLURFÖRDERZEUG**
BATTERY FOR AN INDUSTRIAL TRUCK
BATTERIE POUR UN CHARIOT DE MANUTENTION

(30) Priorität: 24.01.2018 DE 102018101530
(43) Veröffentlichungstag der Anmeldung: 07.08.2019
(73) Patentinhaber: Jungheinrich Aktiengesellschaft, 22047 Hamburg (DE)
(72) Erfinder: Ribbentrop, Klaus-Peter, 24558 Henstedt-Ulzburg (DE); Rosenberg, Tilman, 22303 Hamburg (DE)
(74) Vertreter: Hauck Patentanwaltspartnerschaft mbB

(56) Entgegenhaltungen:
- DE-A1-102005 060 095
- DE-A1-102013 113 809
- JP-A- 2003 238 083
- JP-A- 2012 201 188
- JP-A- 2017 076 527
- SE-B- 309 385
- US-A- 4 026 378
- US-A1- 2008 011 553
- US-A1- 2009 314 557
- US-A1- 2015 303 423
- US-A1- 2017 136 864
- US-A1- 2017 259 693
- US-A1- 2017 288 286
- US-B1- 6 189 636

## Beschreibung

Die vorliegende Erfindung betrifft ein Flurförderzeug mit einer Batterie, die einen einheitlichen Batteriekörper aufweist. Batterien für Flurförderzeuge werden in einem Antriebsteil des Flurförderzeugs mitgeführt. In der Regel ist hierfür ein seitlich zugängliches Batteriefach vorgesehen, in das die Batterie eingeschoben und aus diesem entnommen werden kann. Die Batterie besitzt hierbei eine quaderförmige Gestalt, die an ihren Kanten und Ecken abgerundet sein kann. Das Batteriefach zur Aufnahme der quaderförmigen Batterie ist häufig an einer außenliegenden Seite des Antriebsteils angeordnet und grenzt beispielsweise einen Fahrerarbeitsplatz gegenüber dem Lastteil ab. Ferner ist bekannt, Batterien in Form von Batterieelementen innerhalb des Fahrzeugs verteilt anzuordnen, so beispielsweise in DE 198 46 000 A1 mit mehreren Blöcken von verteilt angeordneten Batterien.

Aus DE 10 2005 060 095 A1 ist ein Niederhubwagen mit einem Antriebsteil und einem Fahrerplatz bekannt geworden, wobei eine Fahrantriebseinheit und ein Batterieblock im Querschnitt L-förmig ausgebildet sind, wobei ein Teil sich unter den Fahrerplatz erstreckt, um hier einen niedrigen Gesamtschwerpunkt für das Flurförderzeug zu erzielen.

Weiterer Stand der Technik wird z.B. durch JP 2017 076527, DE 10 2013 113809 A1, JP 2012 201188 A, US 2017/136864 A1, SE 309 385 B, US 2017/288286 A1, US 2017/259693 A1, US 2008/011553 A1, US 4 026 378 A, US 6 189 636 B1, US 2015/303423 A1, US 2009/314557 A1 oder JP 2003 238083 A dargestellt. Darunter z.B. DE 10 2013 113809 A1, US 6 189 636 B1, oder JP 2003238083 A offenbaren jeweils ein Flurförderzeug mit Batterien mit Batteriegrundkörper, die sich in ihren Höhen in mindestens einer Richtung voneinander unterscheiden, wobei mindestens einer dieser Batteriegrundkörper sich mindestens teilweise unter dem Fahrersitz befindet.

Der Erfindung liegt die Aufgabe zugrunde ein Flurförderzeug bereitzustellen, dessen Batterie besonders gut an die Anforderungen in dem Antriebsteil des Flurförderzeugs angepasst ist.

Erfindungsgemäß wird die Aufgabe durch ein Flurförderzeug mit den Merkmalen aus Anspruch 1 gelöst.

Das erfindungsgemäße Flurförderzeug besitzt eine Batterie mit einem einheitlichen Batteriekörper. Einheitlicher Batteriekörper bedeutet hierbei, dass die Batterie insgesamt als eine Einheit ausgebildet ist und einheitlich gehandhabt werden kann. Der Batteriekörper ist nicht darauf beschränkt, dass er einstückig ausgebildet ist oder eine einstückige Ummantelung besitzt. Die Gestalt des Batteriekörpers, als seine äußeren Abmessungen, ist aus einem ersten und mindestens einem zweiten Grundkörper gebildet. Die Grundkörper sind hierbei nicht physikalisch voneinander getrennte oder miteinander verbundene Grundkörper, sondern gedachte Grundkörper, die in einer Zusammenschau ihrer Körperabmessungen zusammen den Batteriekörper insgesamt ergeben. Die Grundkörper besitzen jeweils eine Gestalt, die durch eine Höhe gekennzeichnet ist. Die Höhe bezieht sich auf eine Ausdehnung in einer Dimension, wobei die Richtung der Ausdehnung durch die vorgesehene Einbauposition in dem Flurförderzeug vorgegeben ist. Dies bedeutet, dass beispielsweise bei einem liegenden Einbau der Batterie, die Höhe der Batterie sich in Fahrzeuglängsrichtung oder quer dazu erstrecken kann. Die Höhe kann insbesondere die Ausdehnung in vertikaler Richtung bezeichnen, bezogen auf die Einbauposition der Batterie. Die Grundkörper des Batteriekörpers unterscheiden sich in ihrer Höhe. Die beiden Grundkörper nebeneinander ergeben für den Batteriekörper zwei unterschiedliche Höhen, das sind Bereiche mit vorzugsweise parallelen Flächen, die um einen Höhenunterschied voneinander beabstandet sind. Die vorzugsweise parallelen Flächen können in der Einbauposition insbesondere waagerecht angeordnet sein. Sie können insbesondere an einer Oberseite der Batterie angeordnet sein. Zwei den beiden Oberseiten gegenüberliegende Unterseiten der beiden Grundkörper können ebenfalls waagerecht angeordnet sein, insbesondere auf gleicher Höhe. Ein Vorteil der unterschiedlichen Höhen für die Batterie liegt darin, dass diese platzsparend in das Antriebsteil des Flurförderzeugs integriert werden kann. Hierbei ist auch vorgesehen, dass ein Sitz für den Fahrer oberhalb des höheren Grundkörpers angeordnet ist und der niedrigere Grundkörper die notwendige Beinfreiheit für den auf dem Sitz sitzenden Fahrer bereitstellt. Auf diese Weise wird das unterschiedliche Niveau der Grundkörper gut für den Fahrerarbeitsplatz ausgenutzt werden. Zwei Gewichte sind in der Batterie vorgesehen, um den Schwerpunkt der Batterie in die Mittelachse, bezogen auf die Breite der Batterie, zu legen.

Bevorzugt sind die Grundkörper der Batterie mit einer quaderförmigen Gestalt versehen, der eine Tiefe, Breite und Höhe zugeordnet ist. Die quaderförmige Gestalt kann eine oder mehrere abgerundete Kanten besitzen. Die Tiefe des Batteriekörpers entspricht jeweils der Tiefe der Grundkörper.

Die beiden gedachten Grundkörper sind bevorzugt derart zu dem Batteriekörper zusammengefasst, dass die Breite des Batteriekörpers der Breite der beiden Grundkörper entspricht. Die beiden Grundkörper sind derart relativ zueinander angeordnet, dass ihre jeweilige Breite sich zur Gesamtbreite des Batteriekörpers addiert. Die Tiefe der nebeneinander und nicht hintereinander angeordneten Grundkörper addiert sich nicht.

In einer bevorzugten Ausgestaltung sind Batteriepole auf einer von einer Aufstandsfläche der Batterie fortweisenden Seite angeordnet. Die fortweisende Seite bildet die Oberseite der Batterie. Die Batteriepole liegen somit oben auf der Batterie und können dort kontaktiert werden. Die Aufstandsfläche besitzt bevorzugt Beine, die beispielsweise mit Gleitstücken aus einem Kunststoffmaterial ausgestattet sind.

Die Batterie selber besteht aus einer Vielzahl von Batteriezellen, wobei es sich hier bevorzugt um Lithium-Ionen oder Lithium-Polymerzellen handelt. Für den Betrieb der Batteriezellen ist bevorzugt in dem Batteriekörper ein Batteriemanagementsystem vorgesehen. Dies kann in den ersten Grundkörper mit der größeren Höhe angeordnet sein. Obwohl das Batteriemanagementsystem beispielsweise in dem ersten Grundkörper angeordnet ist, ist es im Betrieb für alle Batteriezellen, also für die Batteriezellen in beiden Grundkörpern verantwortlich. Auch hieran wird deutlich, dass die beschriebenen Grundkörper weder physikalisch den Batteriekörper unterteilen noch die in dem Batteriekörper vorgesehenen Komponenten durch die Grundkörper voneinander getrennt sind. Vielmehr unterscheiden die Grundkörper lediglich äußerliche Bereiche des Batteriekörpers mit unterschiedlicher Höhe voneinander ab.

In einer bevorzugten Weiterbildung sind in dem Batteriekörper mindestens drei Stränge mit jeweils mehreren Batteriezellen angeordnet. Hierbei sind mindestens zwei Stränge übereinander angeordnet, was zumindest den ersten Grundkörper mit der größeren Höhe teilweise ausfüllt. Ferner sind mindestens zwei Stränge von Batteriezellen nebeneinander angeordnet. Diese Anordnung erstreckt sich dann beispielsweise über den ersten und den zweiten Grundkörper. Allgemein bilden je nach Betriebsspannung bevorzugt 4 oder 8 Batteriezellen einen Stack und bevorzugt 2 Stacks bilden einen Strang. Für den Aufbau der Batterie ist die Unterscheidung von Stacks und Strängen nicht bestimmend.

In einer bevorzugten Weiterbildung der Batterie ist das Batteriemanagement oberhalb eines Strangs mit Batteriezellen angeordnet. Die Anordnung relativ weit oben in der Batterie erleichtert einen Zugriff auf das Batteriemanagementsystem, beispielsweise um dieses ganz oder teilweise auszutauschen, insbesondere auch im eingebauten Zustand der Batterie.

In einer bevorzugten Weiterbildung der Erfindung weist der Batteriekörper mindestens eine abstehende Befestigungslasche auf. Über die mindestens eine Befestigungslasche kann der Batteriekörper lösbar in dem Antriebsteil montiert werden. Insbesondere bei Lithium-Batterien besteht nicht die Notwendigkeit, die Batterie für einen Ladevorgang aus dem Fahrzeug herauszunehmen.

Eine bevorzugte Ausgestaltung der Batterie und eines Flurförderzeugs mit dieser Batterie wird nachfolgend näher beschrieben.
- Fig. 1: zeigt die erfindungsgemäße Batterie in einer Ansicht von oben,
- Fig. 2: zeigt einen Schnitt entlang der Linie A-A aus Figur 1 und
- Fig. 3: zeigt in einer perspektivischen Ansicht das Antriebsteil eines Schubmaststaplers mit eingesetzter Batterie.

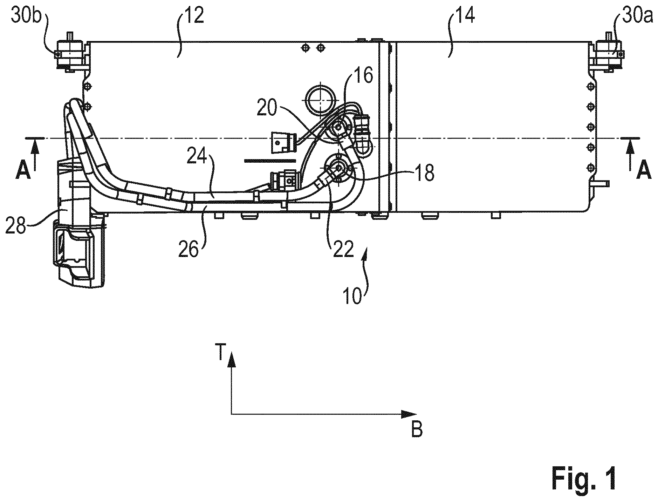

Figur 1 zeigt in einer Draufsicht einen Batteriekörper 10, der einen ersten Grundkörper 12 und einen zweiten Grundkörper 14 besitzt. Der Batteriekörper 10 besitzt eine Breite entlang der eingezeichneten Richtung B und eine Tiefe in Richtung T. In Figur 1 ist ferner ersichtlich, dass die Grundkörper 12 und 14 eine gleiche Tiefe besitzen und dass die Breite des jeweiligen Grundkörpers sich zur Gesamtbreite des Batteriekörpers 10 addiert.

Auf der Oberseite des Grundkörpers 12 sind zwei elektrische Batteriepole 16, 18 dargestellt, die jeweils über eine Kabelschuh 20, 22 mit einem zugehörigen elektrischen Kabel 24, 26 verbunden sind. Die elektrischen Kabel 24, 26 werden auf eine Seite des Batteriekörpers geführt und sind dort mit einem elektrischen Steckverbinder 28 elektrisch leitend verbunden. Über den elektrischen Steckverbinder 28 kann die Batterie beispielsweise für einen Ladevorgang mit einem externen Steckverbinder (nicht dargestellt) kontaktiert werden. Weitere elektrisch leitende Verbindungen, die ins Fahrzeuginnere führen und dessen elektrische Verbraucher speisen, sind zur besseren Übersicht nicht dargestellt.

Der Batteriekörper 10 besitzt für seine Befestigung in dem Flurförderzeug in der Breite seitlich überstehende Laschen 30a, 30b. Über die Laschen kann der Batteriekörper beispielsweise lösbar in dem Antriebsteil befestigt werden.

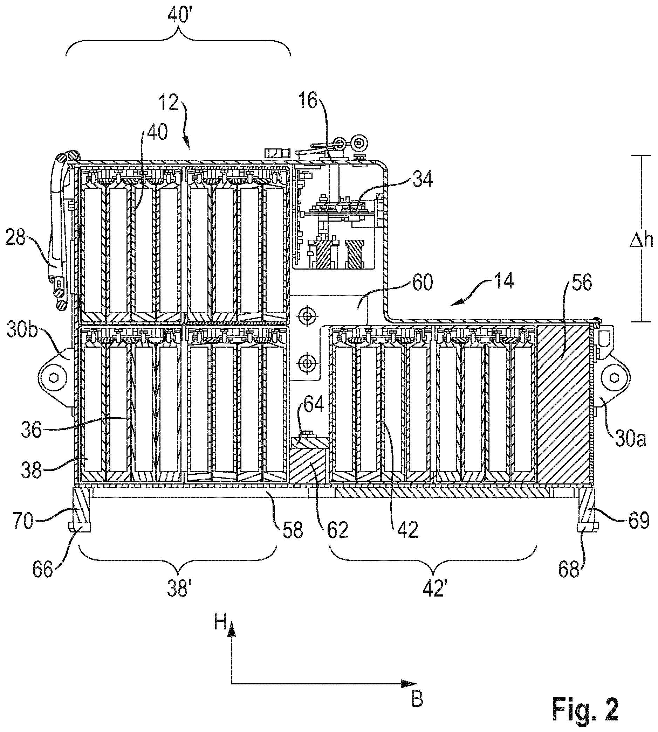

Figur 2 zeigt den Schnitt entlang der Linie A-A aus Figur 1. Deutlich zu erkennen ist der Grundkörper 12, der gegenüber dem Grundkörper 14 eine um Δ h größere Höhe besitzt. Auch ist zu erkennen, dass der Grundkörper 12 eine größere Breite als der Grundkörper 14 besitzt.

In der Schnittdarstellung aus Figur 2 ist das Batteriemanagementsystem 34 unterhalb des Batteriepols 16 zu erkennen. Das Batteriemanagementsystem 34 ist in dem höheren Grundkörper 12 untergebracht. Diese Unterbringung stellt sicher, dass das Batteriemanagementsystem 34 einen guten räumlichen Kontakt zu den Batteriepolen besitzt.

Der Batteriekörper 12 besitzt eine Vielzahl von Stacks 36, in denen Batteriezellen 38 zusammengefasst sind. In dem Schnitt sind vier Batteriezellen pro Stack erkennbar, wobei noch einmal die gleiche Zahl in der Tiefe angeordnet sein kann. Hierbei sind die Stacks 36 und 40 übereinander angeordnet, während die Stacks 36 und 42 nebeneinander angeordnet sind. Deutlich zu erkennen ist auch, dass der Stack 42 sich nicht auf den zweiten Grundkörper 14 beschränkt, sondern auch in den höheren Grundkörper 12 hineinreicht. Jeweils zwei Stacks sind zu einem Strang 36 `, 40', 42` zusammengefasst. Ein Strang 36', 40', 42` bildet eine Baueinheit. Fig. 2 zeigt ferner zwei Gewichte 56 und 58, deren Aufgabe darin besteht, einerseits das Gewicht der Batterie zu erhöhen und andererseits den Schwerpunkt der Batterie in die Mittelachse, bezogen auf die Breite der Batterie zu legen. Gewicht 56 ist seitlich außen den Grundkörper angeordnet und Gewicht 58 besitzt eine L-Form, wobei im Bereich des höheren Grundkörpers das kürzere Bein des Gewichts 58 angeordnet ist. Über einen Winkel 60 ist der Strang 42 in der Batterie befestigt. Der Strang 42 ist eine kompakte Baueinheit, so dass diese durch den Winkel 60 und das Gewicht 56 gehalten werden kann. Eine Gewichtsleiste 62 ist am Boden der Batterie angeordnet und dient über ein Positionsprofil 64 ebenfalls zur Positionierung des Batteriestranges 42.

Gleitstücke 66, 68 aus einem Kunststoffmaterial erleichtern die Montage der Batterie in dem Fahrzeug. Bevorzugt sind die Gleitstücke an Beinen 69, 70 angebracht, durch die Platz für das L-förmige Gewicht 58 an dem Batterieboden geschaffen wird.

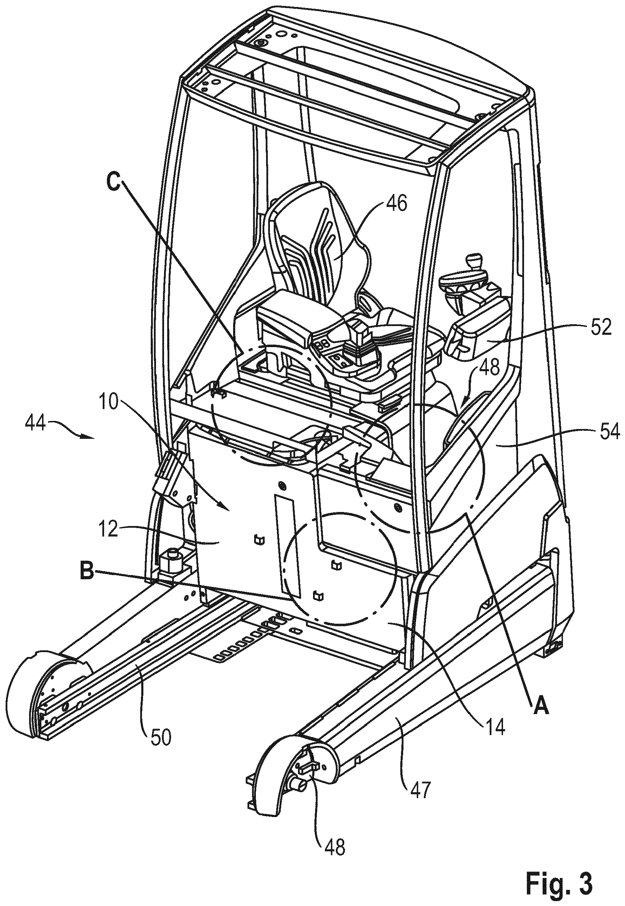

Figur 3 zeigt ein Antriebsteil 44, bei dem zur besseren Übersicht das Lastteil und einige bewegliche Teile nicht dargestellt sind. Zu erkennen sind die Radarme 47, die an ihrem Ende jeweils ein Radhaus 48 tragen. Die Radarme 47 besitzen jeweils eine Schiene 50 in der ein Schubmast verfahrbar ist. Angrenzend bzw. hinter dem Schubmast ist der Batteriekörper 10 zu erkennen. Der Batteriekörper 10 besitzt einen höheren Grundkörper 12, dessen Oberkante sich unterhalb des Niveaus einer Sitzbefestigung des Fahrersitzes 46 erstreckt. Der niedrigere Grundkörper 14 erstreckt sich dabei in den Fußraum. In Figur 3 zu erkennen ist ein Fahrersitz 46, der einen Fußraum 48 besitzt. Gegenüber dem Fahrersitz 46 ist oberhalb des Fußraums 48 ein Bedienelement 52 angeordnet, das von einem sitzenden Fahrer bedient werden kann.

Die Batterie mit unterschiedlich hohen Grundkörpern schafft eine Reihe von Vorzügen, die in den Bereichen A, B und C aus Figur 3 besonders gut erläutert werden können. Bereich A zeigt, dass eine relativ hohe Sitzposition des Fahrersitzes 46 zusammen mit tiefgezogenen Seitenwänden 54 dem Fahrer eine gute Übersicht verschaffen, die auch den Blick durch den Schubmast auf die Gabel des Lasttragmittels miteinschließt.

Die teilweise niedrigere Höhe der Batterie, wie im Bereich B dargestellt, ermöglicht einen großen Fußraum 48 und schafft ausreichend Bein- und Kniefreiheit für den Fahrer.

Im Bereich C, auf dem höheren der beiden Grundkörper ist ausreichend Platz vorhanden, um einen ergonomisch nutzbaren Fahrersitz 46 bereitzustellen, der bevorzugt eine breite Sitzauflage und entsprechende Neige- und Drehfunktionen besitzt. Die stufige Ausbildung der Batterie nutzt den Platz im Antriebsteil besonders gut aus, da Fahrersitz und Raum für die Beinfreiheit unterschiedliche Höhenebenen in dem Antriebsteil definieren.

### Bezugszeichenliste:

- 10: Batteriekörper
- 12: Grundkörper
- 14: Grundkörper
- 16: Batteriepole
- 18: Batteriepole
- 20: Kabelschuh
- 22: Kabelschuh
- 24: Kabel
- 26: Kabel
- 28: Steckverbinder
- 30 a/b: überstehende Lasche
- 32: vorstehende Lasche
- 34: Batteriemanagementsystem
- 36: Stacks
- 38: Batteriezellen
- 40: Stacks
- 42: Stacks
- 44: Antriebsteil
- 46: Fahrersitz
- 47: Radarme
- 48: Radlager
- 50: Schiene
- 52: Bedienelement
- 54: Seitenwänden
- 56: Gewicht
- 58: Gewicht
- 60: Winkel
- 62: Gewichtsleiste
- 64: Positionsprofil
- 66: Gleitstück
- 68: Gleitstück
- 69: Bein
- 70: Bein

## Patentansprüche

1. Flurförderzeug mit einem Antriebs- und einem Lastteil, wobei das Antriebsteil eine Fahrerkabine mit einem Fahrersitz (46) und eine Batterie (10) mit einem einheitlichen Batteriekörper (10) aufweist, dessen Gestalt aus einem ersten und einem zweiten Grundkörper (12, 14) gebildet wird, wobei die Grundkörper (12, 14) jeweils eine Gestalt mit einer Höhe besitzen und die Grundkörper nebeneinander angeordnet sich in ihrer Höhe unterscheiden, wobei die Batterie in dem Antriebsteil derart angeordnet ist, dass der Fahrersitz (46) sich oberhalb des höheren Grundkörpers (12) befindet und der niedrige Grundkörper (14) Beinfreiheit für einen auf dem Fahrersitz sitzenden Fahrer schafft, wobei zwei Gewichte vorgesehen sind, deren Aufgabe darin besteht, den Schwerpunkt der Batterie in die Mittelachse, bezogen auf die Breite der Batterie, zu legen.

2. Flurförderzeug nach Anspruch 1, wobei der Batteriekörper (10) eine Breite aufweist, die einer Breite einer Fahrerkabine entspricht.

3. Flurförderzeug nach Anspruch 1 oder 2, wobei die Grundkörper der Batterie eine quaderförmige Gestalt mit Tiefe, Breite und Höhe besitzen.

4. Flurförderzeug nach einem der Ansprüche 1 bis 3, wobei die Grundkörper der Batterie eine oder mehrere Kanten besitzen.

5. Flurförderzeug nach Anspruch 3 oder 4, wobei die Tiefe des Batteriekörpers (10) der Tiefe der beiden Grundkörper entspricht.

6. Flurförderzeug nach einem der Ansprüche 1 bis 5, wobei die Breite des Batteriekörpers (10) der Breite der beiden Grundkörper (12,14) insgesamt entspricht.

7. Flurförderzeug nach einem der Ansprüche 1 bis 6, wobei Batteriepole (16, 18) auf der von einer Aufstandsfläche fortweisenden Seite angeordnet sind.

8. Flurförderzeug nach einem der Ansprüche 1 bis 7, wobei der Batteriekörper (10) eine Vielzahl von Batteriezellen (38), insbesondere von Lithium-Ionen-Zellen oder Lithium-Polymer-Zellen aufweist.

9. Flurförderzeug nach einem der Ansprüche 1 bis 8, wobei der Batteriekörper (10) ein Batteriemanagementsystem (34) aufweist, das in dem Grundkörper mit der größeren Höhe angeordnet ist.

10. Flurförderzeug nach einem der Ansprüche 1 bis 9, wobei der Batteriekörper (10) mindestens drei Pakete von Batteriezellen (38) aufweist, von denen mindestens zwei übereinander und mindestens zwei nebeneinander angeordnet sind.

11. Flurförderzeug nach Anspruch 9 oder 10, wobei das Batteriemanagementsystem (34) oberhalb eines Pakets von Batteriezellen (38) angeordnet ist.

12. Flurförderzeug nach einem der Ansprüche 1 bis 11, wobei der Batteriekörper (10) mindestens eine seitlich abstehende Befestigungslasche (30a, b,) aufweist.

## Claims

1. An industrial truck comprising a drive part and a load part, wherein the drive part comprises a driver's cab with a driver's seat (46) and a battery (10) with a unified battery body (10), the shape of which is formed of a first and a second base body (12, 14), wherein the base bodies (12, 14) each have a shape with a height and the base bodies arranged one next to the other differ in terms of their height, wherein the battery is arranged in the drive part such that the driver's seat (46) is above the higher base body (12) and the low base body (14) provides leg room for a driver sitting on the driver's seat, wherein two weights are provided, the task of which is to put the center of gravity of the battery in the center axis, relative to the width of the battery.

2. The industrial truck according to claim 1, wherein the battery body (10) has a width that corresponds to a width of a driver's cab.

3. The industrial truck according to claim 1 or 2, wherein the base bodies of the battery have a cuboid design with depth, width and height.

4. The industrial truck according to any one of claims 1 to 3, wherein the base bodies of the battery have one or more edges.

5. The industrial truck according to claim 3 or 4, wherein the depth of the battery body (10) corresponds to the depth of the two base bodies.

6. The industrial truck according to any one of claims 1 to 5, wherein the width of the battery body (10) corresponds to the width of the two base bodies (12, 14) in total.

7. The industrial truck according to any one of claims 1 to 6, wherein battery terminals (16, 18) are arranged on the side pointing away from a support surface.

8. The industrial truck according to any one of claims 1 to 7, wherein the battery body (10) comprises a plurality of battery cells (38), in particular lithium-ion cells or lithium polymer cells.

9. The industrial truck according to any one of claims 1 to 8, wherein the battery body (10) comprises a battery management system (34) that is arranged in the base body at the greater height.

10. The industrial truck according to any one of claims 1 to 9, wherein the battery body (10) comprises at least three packs of battery cells (38), at least two of which are arranged one above the other and at least two of which are arranged one next to the other.

11. The industrial truck according to claim 9 or 10, wherein the battery management system (34) is arranged above a pack of battery cells (38).

12. The industrial truck according to any one of claims 1 to 11, wherein the battery body (10) comprises at least one laterally projecting fastening tab (30a, b).

## Revendications

1. Chariot de manutention doté d'une partie d'entraînement et d'une partie de charge, dans lequel la partie d'entraînement présente une cabine de conducteur comprenant un siège de conducteur (46) et une batterie (10) avec un corps de batterie unitaire (10), dont la forme est constituée d'un premier et d'un deuxième corps de base (12, 14), dans lequel les corps de base (12, 14) présentent respectivement une forme avec une hauteur et les corps de base disposés l'un à côté de l'autre se distinguent dans leur hauteur, dans lequel la batterie est disposée de telle façon dans la partie d'entraînement, que le siège de conducteur (46) se trouve au-dessus du corps de base plus haut (12) et que le corps de base bas (14) fournit un espace pour les jambes pour un conducteur assis sur le siège de conducteur, dans lequel il est prévu deux poids, dont la fonction consiste à établir le point de gravité de la batterie dans l'axe médian, par rapport à la largeur de la batterie.

2. Chariot de manutention selon la revendication 1, dans lequel
le corps de batterie (10) présente une largeur correspondant à une largeur d'une cabine de conducteur.

3. Chariot de manutention selon la revendication 1 ou 2, dans lequel
les corps de base de la batterie présentent une forme quadrangulaire avec une profondeur, une largeur et une hauteur.

4. Chariot de manutention selon l'une des revendications 1 à 3, dans lequel
les corps de base de la batterie présentent une ou plusieurs arêtes.

5. Chariot de manutention selon la revendication 3 ou 4, dans lequel
la profondeur du corps de batterie (10) correspond à la profondeur des deux corps de base.

6. Chariot de manutention selon l'une des revendications 1 à 5, dans lequel
la largeur du corps de batterie (10) correspond à la largeur des deux corps de base (12, 14) dans leur totalité.

7. Chariot de manutention selon l'une des revendications 1 à 6, dans lequel
des bornes de batterie (16, 18) sont disposés sur le côté opposé à une surface portante.

8. Chariot de manutention selon l'une des revendications 1 à 7, dans lequel
le corps de batterie (10) présente une pluralité de cellules de batterie (38), en particulier de cellules lithium-ion ou de cellules lithium-polymère.

9. Chariot de manutention selon l'une des revendications 1 à 8, dans lequel
le corps de batterie (10) présente un système de gestion de batterie (34), lequel est disposé dans le corps de base de hauteur supérieure.

10. Chariot de manutention selon l'une des revendications 1 à 9, dans lequel
le corps de batterie (10) présente au moins trois paquets de cellules de batterie (38), parmi lesquels au moins deux sont superposés et au moins deux disposés côte à côte.

11. Chariot de manutention selon la revendication 9 ou 10, dans lequel
le système de gestion de batterie (34) est disposé au-dessus d'un paquet de cellules de batterie (38).

12. Chariot de manutention selon l'une des revendications 1 à 11, dans lequel
le corps de batterie (10) présente au moins une patte de fixation (30a, b) faisant saillie latéralement.
